(19) Europäisches Patentamt / European Patent Office / Office européen des brevets

(11) **EP 1 544 080 B1**

(12) **FASCICULE DE BREVET EUROPEEN**

(45) Date de publication et mention
de la délivrance du brevet:
**06.08.2008 Bulletin 2008/32**

(51) Int Cl.:
***B62D 7/15*** *(2006.01)*

(21) Numéro de dépôt: **04300850.7**

(22) Date de dépôt: **06.12.2004**

(54) **Procédé et système de commande du braquage de roue arrière directrice et véhicule correspondant**

Verfahren und Vorrichtung zur Hinterradlenkwinkelsteuerung und entsprechendes Fahrzeug

Rear wheel steering angle control system and method and corresponding vehicle

(84) Etats contractants désignés:
**AT BE BG CH CY CZ DE DK EE ES FI FR GB GR HU IE IS IT LI LT LU MC NL PL PT RO SE SI SK TR**

(30) Priorité: **18.12.2003 FR 0314929**

(43) Date de publication de la demande:
**22.06.2005 Bulletin 2005/25**

(73) Titulaire: **RENAULT S.A.S.**
**92100 Boulogne Billancourt (FR)**

(72) Inventeurs:
• **Guegan, Stéphane**
**75002, PARIS (FR)**
• **Pothin, Richard**
**92420, VAUCRESSON (FR)**

(56) Documents cités:
**EP-A- 0 588 135**      **EP-A- 0 663 333**
**EP-A- 0 721 877**      **DE-A- 3 816 254**
**JP-A- 9 249 145**      **US-A- 4 706 979**
**US-A- 5 745 862**

EP 1 544 080 B1

**Description**

La présente invention relève du domaine des systèmes de commande de véhicules terrestres, en particulier de véhicules automobiles à roues.

De façon classique, les véhicules automobiles sont pourvus d'un châssis, d'un habitacle, de roues reliées au châssis par un mécanisme de suspension avec des roues avant directrices commandées par un volant à la disposition du conducteur dans l'habitacle du véhicule.

Le document FR-A-2 681 303 décrit un dispositif de commande de direction arrière pour véhicule automobile à quatre roues directrices, comprenant une plaque formant came et deux galets disposés dans un même plan médian vertical contenant l'axe longitudinal d'une barre de direction arrière commandant le pivotement des roues arrière.

Ce document décrit également que pour obtenir le meilleur comportement routier possible du véhicule, il est nécessaire de braquer les roues arrière dans le même sens que les roues avant pour une valeur d'angle de braquage du volant inférieure à une valeur de seuil prédéterminée dans le sens opposé aux roues avant lorsque la valeur d'angle de braquage dépasse la valeur de seuil. On obtiendrait ainsi un effet « survireur » souhaitable du véhicule lorsque l'angle de braquage est relativement important, par exemple lorsqu'on gare le véhicule dans un garage ou un parc de stationnement, et un effet « sous-vireur »également souhaitable lorsque l'angle de braquage est relativement petit comme c'est le cas lorsque le véhicule roule relativement rapidement.

Toutefois, un tel dispositif, relativement fruste, ne permet pas d'agir finement sur le comportement du véhicule.

Le document EP-0721877 décrit un dispositif de commande d'attitude de véhicule qui comprend une commande de braquage de roue arrière équipée d'un calculateur recevant des signaux de sortie d'un capteur d'angle de braquage des roues directrices, un capteur de vitesse du véhicule, un capteur de mouvement de lacet et un capteur d'angle de braquage des roues arrières et est prévue pour envoyer un signal de commande à un actionneur de braquage des roues arrières. Un des désavantagés de ce système est qu'il est nécessaire de fournir un capteur d'angle de braquage des roues arrières.

Le document EP-0663333 décrit un appareil de commande d'angle de braquage des roues avant et arrière d'un véhicule, équipé d'un détecteur de mouvement de lacet. Un calculateur effectuant un calcul de mouvement de lacet souhaitable de façon que le véhicule puisse se déplacer de façon stable. Un autre calculateur calcule une perturbation du mouvement de lacet provoquant la déviation du mouvement de lacet détecté par rapport au mouvement de lacet idéal. Un compensateur effectue une compensation du mouvement de lacet souhaitable sur la base de la perturbation calculée et produit un mouvement de lacet compensé de façon que le mouvement de lacet souhaitable suive le mouvement de lacet compensé.

La demande de brevet japonais JP 09-249145 sur lequel est fondée la forme en deux parties des revendications indépendantes, décrit un procédé de commande de braquage des roues arrière directrices d'un véhicule dans lequel on calcule deux valeurs de consigne respectivement pour la vitesse de lacet et pour l'angle de dérive. On compare ces deux valeurs de consigne à des valeurs estimées à partir de la vitesse du véhicule, de la vitesse de lacet et de l'angle de braquage réel des roues arrière. La comparaison fournit un signal d'écart qui permet la détermination d'une valeur de consigne et d'une valeur de commande pour l'angle de braquage des roues arrière.

L'objet de la présent invention est de fournir un procédé et un système de commande du braquage de roue arrière directrice amélioré, de préférence permettant d'améliorer le comportement du véhicule et par conséquent la sécurité du conducteur et le confort de conduite.

Tel qu'il est revendiqué, un procédé de commande du braquage de roue arrière directrice pour un véhicule à au moins trois roues directrices, consiste à élaborer une consigne actuelle de braquage de roue arrière en fonction de l'angle de braquage de roue avant, de données de déplacement du véhicule comprenant l'angle de dérive au centre de gravité du véhicule et une consigne antérieure de braquage de roue arrière. On estime des données d'état du véhicule, comprenant la vitesse de lacet et l'angle de dérive. Selon l'invention, les données d'état du véhicule estimées comprennent également l'angle de braquage de roue arrière. La consigne actuelle de braquage de roue arrière est élaborée à partir d'une valeur de consigne dynamique tenant compte de paramètres de réglage, et d'une valeur de consigne statique tenant compte d'un paramètre de réglage, la commande étant faite en boucle fermée.

On peut utiliser une loi de commande avec stratégie en boucle ouverte pour régler les réponses transitoire et statique du véhicule à un coup de volant. Un tel procédé peut être mis en oeuvre grâce à un dispositif de pilotage de roue arrière, au moins un capteur permettant d'estimer la vitesse longitudinale du véhicule, au moins un moyen électronique de calcul et un capteur d'angle du volant.

Dans un mode de réalisation de l'invention, les données de déplacement du véhicule comprennent la vitesse du véhicule, de façon que la consigne actuelle de braquage de roue arrière soit établie en fonction de la vitesse du véhicule.

Dans un mode de réalisation de l'invention, on élabore une consigne actuelle de braquage de roue arrière avec des paramètres de réglage neutres sur le comportement du véhicule lorsque lesdits paramètres de réglage sont égaux à un.

Dans un mode de réalisation de l'invention, la consigne dynamique peut être élaborée à partir d'un correcteur appliqué à des données d'état estimées. La consigne statique peut être élaborée à partir d'un correcteur appliqué à des données d'état estimées et du paramètre de réglage. Le correcteur peut être interpolé en fonction de la vitesse.

On peut utiliser un programme de commande du braquage de roue arrière directrice pour un véhicule à au moins trois roues directrices, dans lequel, en fonction de l'angle de braquage de roues avant, de données de déplacement du véhicule et d'une consigne antérieure de braquage de roue arrière, ledit programme élabore une consigne actuelle de braquage de roue arrière.

La présente invention propose également un système de commande du braquage de roue arrière directrice pour véhicule à au moins trois roues directrices, comprenant un moyen d'élaboration d'une consigne actuelle de braquage de roue arrière en fonction de l'angle de braquage de roue avant, de données de déplacement du véhicule, et d'une consigne antérieure de braquage de roue arrière. Le système comprend un module d'estimation des données d'état du véhicule à partir des données d'entrée, un module d'élaboration d'une consigne dynamique, un module d'élaboration d'une consigne statique, et un module de combinaison de la consigne dynamique et de la consigne statique. Le module de combinaison peut être un soustracteur.

L'invention propose également un véhicule pourvu d'un châssis et d'au moins trois roues directrices reliées élastiquement au châssis, et d'un système de commande du braquage de roue arrière directrice comprenant un moyen d'élaboration d'une consigne actuelle de braquage de roue arrière en fonction de l'angle de braquage de roue avant, de données de déplacement du véhicule, et d'une consigne antérieure de braquage de roue arrière.

L'invention permet à un véhicule d'adopter le comportement le plus stable possible, quel que soit la sollicitation du conducteur ou l'état de la chaussée. Il convient de tenir compte de certaines situations susceptibles d'engendrer une perte de contrôle du véhicule, par exemple un évitement d'obstacle simple ou double.

L'invention permet de réduire les risques de perte de contrôle dans ce type de cas, qui peuvent être dus à une réponse du véhicule inadaptée car trop vive, pas assez amortie ou encore peu prévisible.

Par ailleurs, l'invention permet un accroissement de la sensation de sécurité, du confort et du plaisir de conduite.

L'invention s'applique à des véhicules à quatre roues, deux avant et deux arrière, à trois roues, ou encore à des véhicules à six roues ou plus, dont au moins quatre directrices.

Le système de commande de roue directrices arrière sur véhicule à quatre roues directrices permet de minimiser, en tenant compte de la vitesse du véhicule, la réponse latérale du véhicule à un coup de volant du conducteur. L'optimisation est faite suivant des critères de sécurité, de confort et d'agrément de conduite.

La présente invention sera mieux comprise à l'étude de la description détaillée de quelques modes de réalisation pris à titre d'exemples nullement limitatifs et illustrés par les dessins annexés, sur lesquels :

- la figure 1 est une vue schématique d'un véhicule équipé d'un système de commande selon un aspect de l'invention ; et

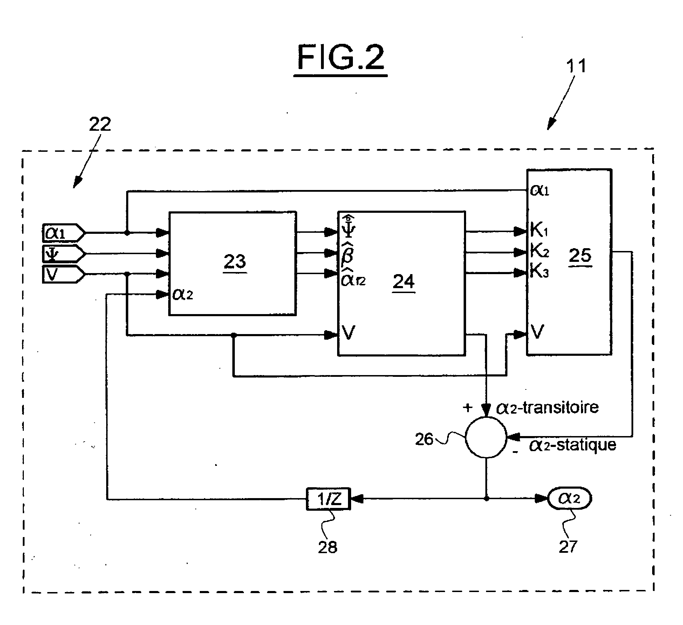

- la figure 2 est un schéma logique du système.

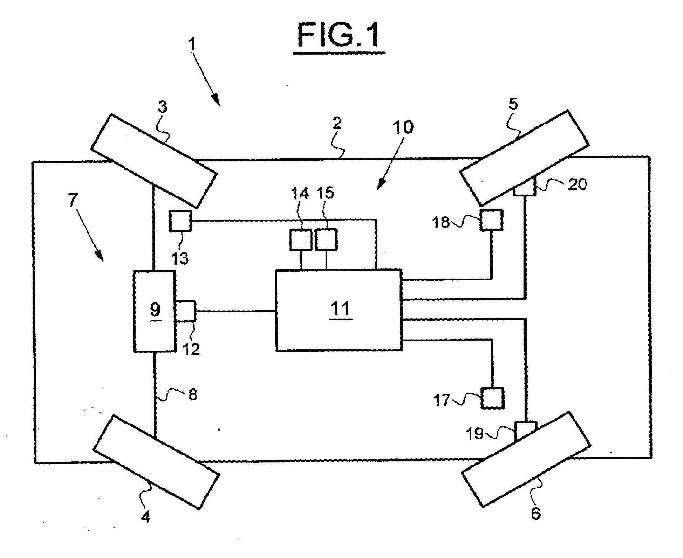

Comme on peut le voir sur la figure 1, le véhicule 1 comprend un châssis 2, deux roues avant directrices 3 et 4 et deux roues arrière directrices 5 et 6, les roues étant reliées au châssis 2 par un mécanisme de suspension non représenté.

Le véhicule 1 se complète par un système de direction 7 comprenant une crémaillère 8 disposée entre les roues avant 3 et 4, un actionneur de crémaillère 9 apte à orienter les roues avant 3 et 4 par l'intermédiaire de la crémaillère 8 en fonction d'ordres reçus, de façon mécanique ou électrique, en provenance d'un volant de direction non représenté, à disposition d'un conducteur du véhicule.

Le système de commande d'aide au braquage 10 comprend une unité de commande 11, un capteur 12 de la position de braquage des roues avant 3 et 4, par exemple positionné sur l'actionneur 9, un capteur 13 de la vitesse de rotation des roues avant permettant de déterminer la vitesse V du véhicule, un capteur 14 de la vitesse de lacet $\dot{\psi}$ du véhicule, c'est-à-dire de la vitesse de rotation du véhicule autour de son centre de gravité suivant un axe vertical, et un capteur 15 de l'accélération latérale au centre de gravité du véhicule.

En outre, le système 10 comprend des capteurs 17 et 18 de l'angle de braquage des roues arrière 5 et 6, et des actionneurs 19 et 20 permettant d'orienter lesdites roues arrière 5 et 6. Toutefois, un seul capteur 17 et un seul actionneur 19 peuvent suffire à la détection de l'angle de braquage et à l'orientation des roues arrière 5 et 6. Les capteurs de position et de vitesse peuvent être de type optique ou encore magnétique, par exemple à effet Hall, coopérant avec un codeur solidaire d'une partie mobile tandis que le capteur est non tournant.

L'unité de commande 11 peut être réalisée sous la forme d'un microprocesseur équipé d'une mémoire vive, d'une mémoire morte, d'une unité centrale et d'interfaces d'entrée/sortie permettant de recevoir des informations des capteurs et d'envoyer des instructions, notamment aux actionneurs 19 et 20.

Plus précisément, l'unité de commande 11 comprend un bloc d'entrée 22 recevant les signaux en provenance des capteurs 12 à 14, et notamment la vitesse du véhicule V, la vitesse de lacet $\dot{\psi}$ et l'angle de roues avant $\alpha_1$. La vitesse du véhicule peut être obtenue en faisant la moyenne de la vitesse des roues avant ou des roues arrière telle que mesurée par les capteurs d'un système antiblocage de roues. Dans ce cas, il est prévu un capteur 13 par roue, le système antiblocage de roues comprenant une sortie reliée à une entrée de l'unité de commande 11 pour fournir l'information de vitesse du véhicule. Alternativement, chaque capteur 13 est relié à une entrée de l'unité de commande 11, l'unité de commande 11 effectuant alors la moyenne de la vitesse des roues.

L'unité de commande 11 comprend également un observateur d'état 23, permettant d'estimer les informations qui ne sont pas mesurées et qui sont nécessaires à la commande, entre autres les perturbations qui agissent sur le véhicule. L'observateur d'état 23 peut par exemple être construit à partir d'un modèle de véhicule à deux roues directrices sans ballant en faisant l'hypothèse qu'une perturbation d de type échelon peut agir directement sur la vitesse de lacet du véhicule sur un intervalle de temps fini. Une dynamique qui modélise le comportement de l'actionneur peut être ajoutée. L'équation d'état associée au modèle étendu par la perturbation, est la suivante :

$$
\begin{bmatrix} \ddot{\psi} \\ \dot{\beta} \\ \dot{\alpha}_{f2} \\ \dot{d} \end{bmatrix} = \begin{pmatrix} -\dfrac{D_1 L_1^2 + D_2 L_2^2}{V I_z} & \dfrac{D_2 L_2 - D_1 L_1}{I_z} & -\dfrac{D_2 L_2}{I_z} & 0 \\ -1 + \dfrac{D_2 L_2 - D_1 L_1}{M V^2} & -\dfrac{D_1 + D_2}{M V} & \dfrac{D_2}{M V} & 0 \\ 0 & 0 & 0 & -\dfrac{1}{\tau} \\ 0 & 0 & 0 & 0 \end{pmatrix} \begin{bmatrix} \dot{\psi} \\ \beta \\ \alpha_{f2} \\ d \end{bmatrix} + \begin{pmatrix} 0 \\ 0 \\ \dfrac{1}{\tau} \\ 0 \end{pmatrix} \alpha_2 + \begin{pmatrix} \dfrac{D_1 L_1}{I_z} \\ \dfrac{D_1}{M V} \\ 0 \\ 0 \end{pmatrix} \alpha_1
$$

$$
y = (1 \ \ 0 \ \ 0 \ \ 1) \begin{bmatrix} \dot{\psi} \\ \beta \\ \alpha_{f2} \\ d \end{bmatrix}
$$

dans laquelle on note y la sortie considérée, M la masse totale du véhicule, $I_2$ l'inertie du véhicule autour d'un axe vertical passant par son centre de gravité, $L_1$ la distance du centre de gravité à l'essieu avant, $L_2$ la distance du centre de gravité à l'essieu arrière, L l'empattement du véhicule égal à L1+L2, $D_1$ la rigidité de dérive avant, $D_2$ la rigidité de dérive arrière, $\alpha_1$ l'angle des roues avant avec l'axe longitudinal du véhicule, $\alpha_{f2}$ l'angle de consigne des roues arrière, $\alpha_{f2}$ l'angle de braquage réel des roues arrière, V la vitesse du véhicule, $\dot{\psi}$ la vitesse de lacet, $\beta$ l'angle de dérive, c'est-à-dire de l'angle que fait le vecteur vitesse du véhicule avec l'axe longitudinal dudit véhicule., et $\tau$ le temps de réponse de l'actionneur.

À partir de ce modèle, on développe la théorie classique des observateurs linéaires. L'observateur d'état 23 permet d'estimer les états du véhicule et l'ensemble des perturbations qui agissent sur le véhicule. L'observateur d'état peut donc utiliser l'équation suivante :

$$\begin{bmatrix} \dot{\hat{\psi}} \\ \dot{\hat{\beta}} \\ \dot{\hat{\alpha}}_{f2} \\ \dot{\hat{d}} \end{bmatrix} = \begin{pmatrix} -\dfrac{D_1 L_1^2 + D_2 L_2^2}{VI_z} & \dfrac{D_2 L_2 - D_1 L_1}{I_z} & -\dfrac{D_2 L_2}{I_z} & 0 \\ -1 + \dfrac{D_2 L_2 - D_1 L_1}{MV^2} & -\dfrac{D_1 + D_2}{MV} & \dfrac{D_2}{MV} & 0 \\ 0 & 0 & 0 & -\dfrac{1}{\tau} \\ 0 & 0 & 0 & 0 \end{pmatrix} \begin{bmatrix} \hat{\psi} \\ \hat{\beta} \\ \hat{\alpha}_{f2} \\ \hat{d} \end{bmatrix} + \begin{pmatrix} 0 \\ 0 \\ \dfrac{1}{\tau} \\ 0 \end{pmatrix} \alpha_2 + \begin{pmatrix} \dfrac{D_1 L_1}{I_z} \\ \dfrac{D_1}{MV} \\ 0 \\ 0 \end{pmatrix} \alpha_1 + Ko(V)(\dot{\psi} - \hat{y})$$

$$\hat{y} = (1\ 0\ 0\ 1) \begin{bmatrix} \hat{\psi} \\ \hat{\beta} \\ \hat{\alpha}_{f2} \\ \hat{d} \end{bmatrix}$$

avec $\wedge$ qui signifie que les valeurs sont estimées, d la perturbation subie par le véhicule, et Ko(V) le paramètre de réglage de l'observateur d'état qui évolue en fonction de la vitesse du véhicule. Les quatre valeurs estimées $\dot{\hat{\psi}}, \hat{\beta}, \hat{\alpha}_{f2}$ et $\hat{d}$ fournissent une estimation de l'état du véhicule qui pourrait être utilisée par d'autres éléments de l'unité de commande 11.

L'unité de commande 11 comprend en outre un bloc 24 de calcul des transitoires. Le bloc 24 calcule la valeur de commande de l'angle de braquage des roues arrière 5 et 6 noté $\alpha_2$ transitoire qui permet d'agir sur la dynamique de la réponse transitoire. Le calcul peut être effectué par une technique de placement de pôles. On peut se référer à cet égard au document Kautsky, J. et N.K. Nichols, « Robust Pole Assignment in Linear State Feedback », Int. J. Control, 41 (1985), pages 1129-1155. Si on note $[a_1(V)+b_1(V)i\ (a_2(V)+b_2(V)i\ (a_3(V)+b_3(V)i]$. Les trois pôles du système décrit ci-dessus sans la perturbation, a(V) et b(V) correspondant respectivement aux parties réelles et imaginaires de chacun des pôles à la vitesse V, on cherche le correcteur $K=[K_1(V)\ K_2(V)\ K_3(V)]$ qui placera les pôles du système bouclé en

$$[Tdyn_{11}(V).a_1(V)+Tdyn_{12}(V).b_1(V).i$$

$$Tdyn_{21}(V).a_2(V)+Tdyn_{22}(V).b_2(V).i$$

$$Tdyn_{31}(V).a_3(V)+Tdyn_{32}(V).b_3(V).i]$$

$Tdyn_{11}$, $Tdyn_{12}$, $Tdyn_{21}$, $Tdyn_{22}$, $Tdyn_{31}$, $Tdyn_{32}$ étant les paramètres de réglage (variables en fonction de la vitesse du véhicule V de la réponse transitoire du véhicule.

Le correcteur K(Vo) peut se calculer, pour chaque vitesse Vo choisie, par la méthode de placement de pôles décrite dans le document précité. Le correcteur K(V) est ensuite interpolé en fonction de la vitesse. On obtient ainsi la variable de commande :

$$\alpha_{2-Transitoire} = K_1(V).\dot{\hat{\psi}} + K_2(V)\,\hat{\beta} + K_3(V)\hat{\alpha}_{f2}$$

On notera que si les paramètres de réglage sont égaux à 1, on ne modifie pas la réponse dynamique du véhicule, qu'un paramètre supérieur à 1 se traduit par une augmentation de la vivacité de la réponse du véhicule et qu'un paramètre inférieur à 1 se traduit par une diminution de la vivacité de la réponse du véhicule. On peut prévoir, à titre d'exemple de réglage:

$$Tdyn_{11} = 0,8$$

$$Tdyn_{12} = 0$$

$$Tdyn_{21} = 0,8$$

$$Tdyn_{22} = 0$$

$$Tdyn_{31} = 0,8$$

$$Tdyn_{32} = 0$$

Un tel réglage permet de ralentir la réponse dynamique du véhicule et de supprimer les oscillations en vitesse de lacet et dérive du véhicule. À vitesse élevée, 90 km/h par exemple, ce réglage permet d'optimiser le passage d'un double changement de file.

L'unité de commande 11 comprend en outre un bloc 25 de calcul de la commande statique notée $\alpha_{2\text{-statique}}$ recevant en entrée l'angle de braquage $\alpha_1$ de roues avant tel que mesuré par le capteur 12, les coefficients $K_1$, $K_2$ et $K_3$ calculés le bloc 24 et la vitesse V du véhicule mesurée par le capteur 13. La commande $\alpha_{2\text{-statique}}$ permet d'agir sur la réponse statique du véhicule et de modifier la valeur stabilisée de la vitesse de lacet obtenue suite à un coup de volant d'amplitude donnée. Le résultat peut être exprimé par comparaison avec le gain statique qu'on obtiendrait sur le véhicule dont les roues arrière sont non directrices.

$$\left[\frac{\dot{\psi}_{STABILISE}}{\alpha_1}\right]_{4RD} = Tgs.\left[\frac{\dot{\psi}_{STABILISE}}{\alpha_1}\right]_{2RD}$$

où Tgs est le paramètre de réglage qui peut varier, si nécessaire, en fonction de la vitesse V.

La deuxième partie de la commande se calcule en fonction de Tgs de la façon suivante :

$$\alpha_{2\text{-statique}} = [(1-Tgs(V)).(1+K_3(V))+Tgs(V).(K_1(V).G_{\dot{\psi}}+K_2(V).G_{\beta2})+K_2(V)]\alpha_1$$

avec :

$$G\dot{\psi} = \frac{V}{L+\dfrac{M.(L_2 D_2 - L_1 D_1)}{LD_1 D_2}}$$

$$G_{\beta_2} = G\dot{\psi}\left(\frac{L_1}{V}+\frac{L_2 MV}{LD_1}\right)$$

Si Tgs est égal à 1, la réponse statique du véhicule n'est pas modifiée et donc identique à celle d'un véhicule à roues arrière non directrices. Une valeur du coefficient Tgs supérieure à 1 se traduit par une augmentation de la réponse statique du véhicule, tandis qu'une valeur inférieure à 1 se traduit par une diminution de la réponse statique du véhicule. On peut prévoir Tgs=1,2 pour une vitesse de 90 km/h, ce qui permet de rendre la réponse du véhicule plus directe et donc d'optimiser le passage d'un double changement de file.

L'unité de commande 11 se complète par un soustracteur 26, une sortie 27 et un retard unitaire 28. Le soustracteur 26 reçoit sur son entrée positive la sortie de commande $\alpha_{2\text{-transitoire}}$ du bloc 24 et sur son entrée négative la sortie de commande $\alpha_{2\text{-statique}}$ du bloc 25. La sortie du soustracteur 26 est reliée, d'une part, à la sortie générale 27 de l'unité de commande 11, et, d'autre part, au retard unitaire 28, dont la sortie est reliée à une entrée de l'observateur d'état 23 pour lui fournir l'angle de braquage des roues arrière à un instant précédent.

La présente invention propose un système de commande de braquage de roues arrière avec structure en boucle fermée au moyen d'un contrôleur permettant de modifier la dynamique du système et un gain permettant le réglage du gain statique, le tout variable en fonction de la vitesse.

La stratégie de commande permet de régler la partie transitoire de la réponse latérale du véhicule à un coup de volant. En particulier, on peut régler la vitesse de la réponse ainsi que son amortissement. Le réglage final, fonction de la vitesse du véhicule, permet d'optimiser l'efficacité et la facilité de passage d'un double changement de file ou encore la manoeuvre à basse vitesse.

La stratégie de commande permet de régler la partie statique de la réponse latérale du véhicule à un coup de volant. Le réglage final, fonction de la vitesse du véhicule, permet par exemple d'optimiser l'efficacité et la facilité de passage d'un double changement de file et/ou la manoeuvre à basse vitesse.

Les parties statique et dynamique de la réponse du véhicule peuvent faire l'objet d'un réglage indépendant. La structure en boucle fermée assure une excellente précision et une robustesse élevée. En outre, il est possible de tenir compte de la dynamique de l'actionneur 9 des roues avant 3 et 4 et des actionneurs 19 et 20 des roues arrière 5 et 6. Le réglage des paramètres est rapide et intuitif, car lesdits paramètres sont liés aux performances minimales du véhicule, c'est-à-dire aux performances d'un véhicule à roues arrière non directrices. En effet, des paramètres de réglage égaux à 1 ne modifient pas le comportement du véhicule, alors que des paramètres de réglage supérieurs à 1 rendent le comportement plus vif et plus direct et vice-versa.

**Revendications**

**1.** Procédé de commande du braquage de roue arrière directrice (5) pour un véhicule (1) à au moins trois roues directrices, dans lequel on élabore une consigne actuelle ($\alpha 2$) de braquage de roue arrière en fonction de l'angle ($\alpha 1$) de braquage de roue avant, de données de déplacement du véhicule comprenant l'angle de dérive ($\beta$) au centre de gravité du véhicule et une consigne antérieure de braquage de roue arrière et on estime des données d'état du véhicule, comprenant la vitesse de lacet ($\hat{\dot{\psi}}$) et l'angle de dérive ($\hat{\beta}$), **caractérisé par le fait que** les données d'état du véhicule estimées comprennent également l'angle de braquage ($\hat{\alpha}_{f2}$) de roue arrière et que la consigne actuelle ($\alpha 2$) de braquage de roue arrière est élaborée à partir d'une valeur de consigne dynamique ($\alpha 2$ - transitoire) tenant compte de paramètres de réglage (Tdyn), et d'une valeur de consigne statique ($\alpha 2$ - statique) tenant compte d'un paramètre de réglage (Tgs), la commande étant fait en boucle fermée.

**2.** Procédé selon la revendication 1, dans lequel les données de déplacement du véhicule comprennent la vitesse du véhicule de façon que la consigne actuelle de braquage de roue arrière soit établie en fonction de la vitesse du véhicule.

**3.** Procédé selon la revendication 1 ou 2, dans lequel on élabore une consigne actuelle de braquage de roue arrière avec des paramètres de réglage neutres sur le comportement du véhicule lorsque lesdits paramètres de réglage sont égaux à un.

**4.** Procédé selon l'une quelconque des revendications précédentes, dans lequel les données de déplacement du véhicule comprennent la vitesse de lacet.

**5.** Procédé selon l'une des revendications précédentes, dans lequel les données d'état estimées comprennent, en outre, une perturbation estimée $\hat{d}$.

**6.** Procédé selon la revendication 5, dans lequel la consigne dynamique est élaborée à partir d'un correcteur appliqué aux données d'état estimées et du paramètre de réglage.

**7.** Procédé selon la revendication 7, dans lequel le correcteur est interpolé en fonction de la vitesse.

**8.** Système de commande du braquage de roue arrière directrice (5) pour un véhicule (1) à au moins trois roues directrices comprenant : un moyen d'élaboration d'une consigne actuelle ($\alpha$2) de braquage de roue arrière en fonction de l'angle ($\alpha$1) de braquage de roue avant, de données de déplacement du véhicule comprenant l'angle de dérive ($\beta$) au centre de gravité du véhicule et une consigne antérieure de braquage de roue arrière ; un module d'estimation (23) de données d'état du véhicule, comprenant la vitesse de lacet $(\dot{\hat{\psi}})$ et l'angle de dérive ($\hat{\beta}$) ; **caractérisé par le fait que** le module d'estimation (23) de données d'état du véhicule est capable d'estimer également l'angle de braquage ($\hat{\alpha}_{f2}$) de roue arrière; et qu'il comprend un module (24) d'élaboration d'une consigne dynamique, un module (25) d'élaboration d'une consigne statique et un module de combinaison de la consigne dynamique et de la consigne statique dont la sortie est reliée à une entrée du module d'estimation (23).

**9.** Système selon la revendication 8, **caractérisé par le fait que** ledit module de combinaison est un soustracteur (26).

**10.** Véhicule (1) comprenant un châssis (2) et au moins trois roues directrices (3 à 5) reliées élastiquement au châssis (2), **caractérisé par le fait qu'**il comprend un système (10) de commande du braquage de roue arrière directrice (5) selon les revendications 8 or 9.


## Claims

**1.** Method of controlling the steerable rear wheel lock (5) for a vehicle (1) with at least three steerable wheels, in which a current setpoint ($\alpha$2) of rear wheel lock is formulated as a function of the angle ($\alpha$1) of front wheel lock of vehicle displacement data comprising the angle of drift ($\beta$) at the centre of gravity of the vehicle and a previous setpoint of rear wheel lock and vehicle state data are estimated, comprising the rate of yaw ($\hat{\psi}$) and the angle of drift ($\hat{\beta}$), **characterized in that** the estimated vehicle state data also comprise the angle of lock ($\hat{\alpha}_{f2}$) of the rear wheel and that the current setpoint ($\alpha$2) of the rear wheel lock is formulated on the basis of a dynamic setpoint value ($\alpha$2-transient) that takes account of adjustment parameters (Tdyn), and of a static setpoint value ($\alpha$2-static) that takes account of an adjustment parameter (Tgs), the control being effected in a closed loop.

**2.** Method according to Claim 1, in which the vehicle displacement data comprise the speed of the vehicle in such a way that the current setpoint of rear wheel lock is established as a function of the speed of the vehicle.

**3.** Method according to Claim 1 or 2, in which a current setpoint of rear wheel lock is formulated with adjustment parameters that are neutral with regard to the behavior of the vehicle when said adjustment parameters are equal to one.

**4.** Method according to any one of the preceding claims, in which the vehicle displacement data comprise the yaw rate.

**5.** Method according to one of the preceding claims, in which the estimated state data comprise, furthermore, an estimated perturbation $\hat{d}$.

**6.** Method according to Claim 5, in which the dynamic setpoint is formulated on the basis of a corrector applied to the estimated state data and of the adjustment parameter.

**7.** Method according to Claim 6, in which the corrector is interpolated as a function of speed.

**8.** Control system for the steerable rear wheel lock (5) for a vehicle (1) with at least three steerable wheels, comprising a means for formulating a current setpoint ($\alpha$2) of rear wheel lock as a function of the angle ($\alpha_{1}$) of front wheel lock, of vehicle displacement data comprising the angle of drift ($\beta$) at the centre of gravity of the vehicle and of a previous setpoint of rear wheel lock; a module for estimating (23) state data of the vehicle comprising the rate of yaw ($\hat{\psi}$) and the angle of drift ($\hat{\beta}$); **characterized in that** the module (23) for estimating state data of the vehicle is capable of also estimating the angle of the lock ($\hat{\alpha}_{f2}$) of the rear wheel; and **in that** it comprises a module (24) for formulating a dynamic setpoint, a module (25) for formulating a static setpoint, and a module for combining the dynamic setpoint and the static setpoint whose output is linked to an input of the estimation module (23).

9. System according to Claim 8, **characterized in that** said combining module is a subtractor (26).

10. Vehicle (1) comprising a chassis (2) and at least three steerable wheels (3 to 5) linked elastically to the chassis (2), **characterized in that** it comprises a system (10) for controlling the steerable rear wheel lock (5) according to Claims 8 or 9.

**Patentansprüche**

1. Verfahren zur Steuerung des Lenkeinschlags eines gelenkten Hinterrads (5) für ein Fahrzeug (1) mit mindestens drei gelenkten Rädern, bei dem ein aktueller Hinterrad-Soll-Lenkeinschlag ($\alpha$2) in Abhängigkeit vom Vorderrad-Lenkeinschlagwinkel ($\alpha$1), von Bewegungsdaten des Fahrzeugs, die den Driftwinkel ($\beta$) im Schwerpunkt des Fahrzeugs enthalten, und ein vorhergehender Soll-Lenkeinschlag des Hinterrads erarbeitet wird, und Zustandsdaten des Fahrzeugs geschätzt werden, die die Giergeschwindigkeit ($\hat{\dot{\psi}}$) und den Driftwinkel ($\hat{\beta}$) enthalten, **dadurch gekennzeichnet, dass** die geschätzten Zustandsdaten des Fahrzeugs ebenfalls den Hinterrad-Lenkeinschlagwinkel ($\hat{\alpha}_{j2}$) enthalten, und dass der aktuelle Hinterrad-Soll-Lenkeinschlag ($\alpha$2) ausgehend von einem dynamischen Sollwert ($\alpha$2 - vorübergehend), der Einstellparameter (Tdyn) berücksichtigt, und einem statischen Sollwert ($\alpha$2 - statisch) erarbeitet wird, der einen Einstellparameter (Tgs) berücksichtigt, wobei die Steuerung in geschlossener Schleife erfolgt.

2. Verfahren nach Anspruch 1, bei dem die Bewegungsdaten des Fahrzeugs die Geschwindigkeit des Fahrzeugs enthalten, damit der aktuelle Hinterrad-Soll-Lenkeinschlag in Abhängigkeit von der Geschwindigkeit des Fahrzeugs erstellt wird.

3. Verfahren nach Anspruch 1 oder 2, bei dem ein aktueller Hinterrad-Soll-Lenkeinschlag mit neutralen Einstellparametern über das Verhalten des Fahrzeugs erarbeitet wird, wenn die Einstellparameter gleich eins sind.

4. Verfahren nach einem der vorhergehenden Ansprüche, bei dem die Bewegungsdaten des Fahrzeugs die Giergeschwindigkeit enthalten.

5. Verfahren nach einem der vorhergehenden Ansprüche, bei dem die geschätzten Zustandsdaten außerdem eine geschätzte Störung $\hat{d}$ enthalten.

6. Verfahren nach Anspruch 5, bei dem der dynamische Sollwert ausgehend von einem an die geschätzten Zustandsdaten angewendeten Korrekturwert und von dem Einstellparameter erarbeitet wird.

7. Verfahren nach Anspruch 6, bei dem der Korrekturwert in Abhängigkeit von der Geschwindigkeit interpoliert wird.

8. System zur Steuerung des Lenkeinschlags eines gelenkten Hinterrads (5) für ein Fahrzeug (1) mit mindestens drei gelenkten Rädern, das aufweist: eine Einrichtung zur Erarbeitung eines aktuellen Hinterrad-Soll-Lenkeinschlags ($\alpha$2) in Abhängigkeit vom Vorderrad-Lenkeinschlagwinkel ($\alpha$1), von Bewegungsdaten des Fahrzeugs, die den Driftwinkel ($\beta$) im Schwerpunkt des Fahrzeugs enthalten, und eines vorhergehenden Hinterrad-Soll-Lenkeinschlags;

einen Schätzmodul (23) von Zustandsdaten des Fahrzeugs, die die Giergeschwindigkeit ($\hat{\dot{\psi}}$) und den Driftwinkel ($\hat{\beta}$) enthalten; **dadurch gekennzeichnet, dass** der Schätzmodul (23) von Zustandsdaten des Fahrzeugs in der Lage ist, ebenfalls den Hinterrad-Lenkeinschlagwinkel ($\hat{\alpha}_{j2}$) zu schätzen; und dass es einen Modul (24) zur Erarbeitung eines dynamischen Sollwerts, einen Modul (25) zur Erarbeitung eines statischen Sollwerts und einen Modul zur Kombination des dynamischen Sollwerts und des statischen Sollwerts aufweist, dessen Ausgang mit einem Eingang des Schätzmoduls (23) verbunden ist.

9. System nach Anspruch 8, **dadurch gekennzeichnet, dass** der Kombinationsmodul ein Subtrahierglied (26) ist.

10. Fahrzeug (1) mit einem Fahrwerk (2) und mit mindestens drei gelenkten Rädern (3 bis 5), die elastisch mit dem Fahrwerk (2) verbunden sind, **dadurch gekennzeichnet, dass** es ein System (10) zur Steuerung des Lenkeinschlags eines gelenkten Hinterrads (5) nach den Ansprüchen 8 oder 9 aufweist.

## FIG.1

# FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2681303 A
- EP 0721877 A
- EP 0663333 A
- JP 9249145 A

**Littérature non-brevet citée dans la description**

- **KAUTSKY, J. ; N.K. NICHOLS.** Robust Pole Assignment in Linear State Feedback. *Int. J. Control,* 1985, vol. 41, 1129-1155